# EUROPEAN PATENT SPECIFICATION

(11) **EP 2 740 395 B1**
(45) Date of publication and mention of the grant of the patent: **15.08.2018**
(21) Application number: 13195284.8
(22) Date of filing: 02.12.2013
(51) Int. Cl.: A47L 11/40

(54) **Robot cleaner with voice input unit**
Reinigungsroboter mit Sprecheingabeeinheit
Robot nettoyeur avec une system de reconnaissance vocale

(30) Priority: 04.12.2012 KR 20120139670
(43) Date of publication of application: 11.06.2014
(73) Proprietor: LG Electronics Inc., Youngdungpo-gu Seoul 150-721 (KR)
(72) Inventor: Yang, Haeseock, 641-711 Gyeongsangnam-do (KR); Choi, Dongsuk, 641-711 Gyeongsangnam-do (KR)
(74) Representative: Vossius & Partner Patentanwälte Rechtsanwälte mbB

(56) References cited:
- EP-A2- 1 731 072
- KR-A- 20120 114 670
- US-A1- 2005 183 230

## Description

Generally, robot cleaners automatically run and suck dusts or foreign substances on a floor.

A user may input a command for operating a robot cleaner using a remote controller or may input the command for operating by using an input unit provided in the robot cleaner.

In methods of inputting the command described above, since it is necessary to directly operate a button or a remote controller, it is inconvenient.

Accordingly, recently, robot cleaners operated by receiving voices of users have been provided. Such robot cleaners may include a microphone for receiving a voice and a control unit controlling a corresponding robot cleaner in response to a received voice signal. An example is given in KR20120114670.

However, in case of general robot cleaners, since a microphone is exposed outward from a robot cleaner, not only voices of a user but also peripheral noises are inputted to the microphone in such a way that the control unit has a difficulty of clearly recognizing the voice. In addition, since a noise generated while the robot cleaner is operating is also inputted via the microphone, an error is most likely to occur in voice recognition.

Embodiments provide robot cleaners.

In one embodiment, a robot cleaner includes a main body, a voice input unit installed on the main body and including a microphone, a cover member to cover the voice input unit, and a buffering member provided on one of the main body and the cover member and adjacent to the voice input unit.

When the cover member is coupled to the main body, the cover member is in contact with the buffering member, or in a state which the cover member is spaced apart from the buffering member, the cover member is deformed by an external force to be in contact with the buffering member.

The buffering member is provided in plurality, the voice input unit is disposed in an area between the plurality of buffering members.

The robot cleaner further comprises an additional buffering member spaced apart from the buffering member.

The cover member is provided with a guide hole and a noise prevention portion formed with a hole aligned with the guide hole, and when the cover member is coupled to the main body, the noise prevention portion is in contact with the voice input unit.

The cover member is provided with an installation portion to allow the noise prevention portion to be installed while maintaining level, and a lower surface of the installation portion is a flat surface and maintains level.

The cover member is provided with a waterproof film for preventing an inflow of external foreign substances or water through the guide hole.

The waterproof film is provided on at least one of an upper surface of the cover member, a space between the installation portion and the noise prevention portion, or a lower surface of the noise prevention portion.

The main body comprises a receiving portion to receive the voice input unit, wherein the voice input unit further comprises a sealing member to cover the microphone, and wherein the sealing member and the microphone are supported by a bottom surface of the receiving portion.

While the sealing member is being received in the receiving portion, the sealing member protrudes upwardly from the main body.

The sealing member is provided with a hole for guiding a voice.

A filter to remove noises is provided in the sealing member.

In another embodiment, a robot cleaner includes a main body including a receiving portion, a microphone received in the receiving portion, a sealing member received in the receiving portion and covering the microphone, a cover member to cover the body, and a buffering member disposed between the main body and the cover member.

The robot cleaner further comprises a noise prevention portion disposed between the sealing member and the cover member.

The noise prevention portion is mounted on the sealing member, and wherein the sealing member and the noise prevention portion are provided with holes aligned to each other, respectively.

A filter to remove noises is provided between the hole of the sealing member and the microphone.

The cover member is provided with an installation portion to allow the noise prevention portion to be installed while maintaining level, and wherein a lower surface of the installation portion is a flat surface and maintains level.

The robot cleaner further comprises a waterproof film disposed between the noise prevention portion and the cover member.

The buffering member is provided in plurality, wherein the sealing member is disposed in an area between the plurality of buffering members.

The sealing member protrudes upwardly from the body while being mounted on the receiving portion.

The details of one or more embodiments are set forth in the accompanying drawings and the description below. Other features will be apparent from the description and drawings, and from the claims.

### BRIEF DESCRIPTION OF THE DRAWINGS

FIG. 1 is a perspective view illustrating a robot cleaner according to an embodiment of the present invention;
FIG. 2 is a top view illustrating a robot cleaner removed with an upper cover;
FIG. 3 is a bottom view illustrating a cover member according to an embodiment of the present invention; and
FIG. 4 is a cross-sectional view illustrating a microphone installation configuration according to an embodiment of the present invention.

### DETAILED DESCRIPTION OF THE EMBODIMENTS

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the spirit or scope of the invention. To avoid detail not necessary to enable those skilled in the art to practice the invention, the description may omit certain information known to those skilled in the art. The following detailed description is, therefore, not to be taken in a limiting sense.

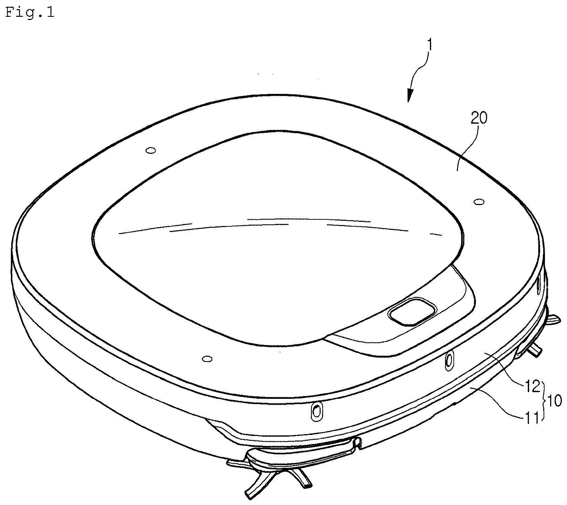

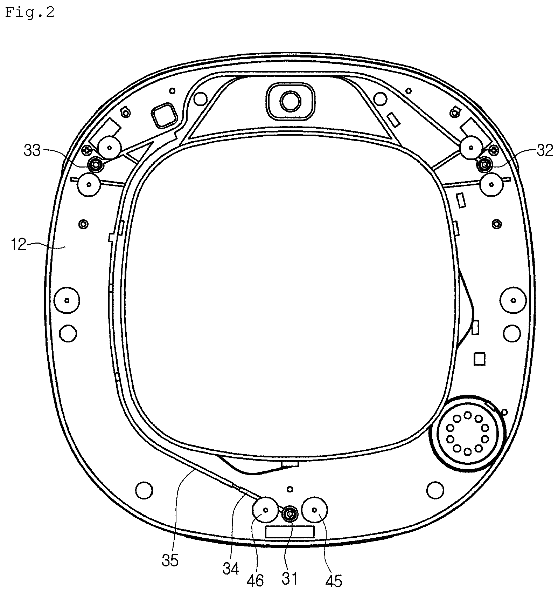

FIG. 1 is a perspective view illustrating a robot cleaner 1 according to an embodiment of the present invention, and FIG. 2 is a top view illustrating the robot cleaner 1 removed with an upper cover.

Referring to FIGS. 1 and 2, the robot cleaner 1 may include a main body 10 built with a motor for a transfer and a controller therein and a cover member 20 covering an upper side of the main body 10. The main body 10 may include a transfer device (not shown) for transferring to the main body 10. The transfer device may include a plurality of wheels and a plurality of driving motors for rotating the plurality of wheels, respectively.

Since the embodiment is substantially for a configuration for receiving a voice and other components of a robot cleaner may be embodied by well-known art, a detailed description thereof will be omitted.

The main body 10 may include a base 11 and an upper body 12 combined with an upper side of the base 11. Also, a plurality of components may be received between the base 11 and the upper body 12.

The upper body 12 may include a plurality of microphones 31, 32, and 33 for receiving a voice. In FIG. 2, as an example, three microphones 31, 32, and 33 are included in the upper body 12 but the number of microphones is not limited thereto.

Also, on an inside of the main body 10 or an outer surface of the main body 10, a reference microphone (not shown) for receiving a sound generated inside while the robot cleaner 1 is operating may be further provided.

The control unit (not shown) may recognize a voice command based on voice signals inputted from the reference microphone and the plurality of microphones 31, 32, and 33. In detail, the control unit, based on information inputted from the reference microphone, may remove noises from voice information inputted from the plurality of microphones 31, 32, and 33.

A virtual line connecting the three microphones 31, 32, and 33 may form a triangle. The upper body 12 may be formed with a wire receiving groove 35 receiving a wire 34 connected to the respective microphones 31, 32, and 33. According to the embodiment, the wire 34 is received in the wire receiving groove 35, thereby protecting the wire from being damaged and arranging neatly the wire 34.

The cover member 20 may cover an upper side of the upper body 12. While the cover member 20 is covering the upper body 12, the cover member 20 may cover the plurality of microphones 31, 32, and 33. Accordingly, the cover member 20 may be understood as forming an external shape of the robot cleaner 1 and additionally covering the plurality of microphones 31, 32, and 33.

The upper body 12 may include a plurality of buffering members 45 and 46. The buffering members 45 and 46 may be formed of any material that may absorb a shock.

The plurality of buffering members 45 and 46 is disposed adjacently to the respective microphones 31, 32, and 33. As an example, between the two buffering members 45 and 46, the respective microphones 31, 32, and 33 are located.

While the cover member 20 covers the upper body 12, a lower surface of the cover member 20 may be in contact with the plurality of buffering members 45 and 46. Otherwise, when the cover member 20 covers the upper body 12, the lower surface of the cover member 20 may be separated from the plurality of buffering members 45 and 46. When an external force is applied to the cover member 20, the cover member 20 is deformed in such a way that the lower surface of the cover member 20 may be in contact with the plurality of buffering members 45 and 46.

According to the embodiment, since the lower surface of the cover member 20 may be in contact with the plurality of buffering members 45 and 46, noises occurring due to tremors or vibrations of the cover member 20 may be prevented. When noises are generated by tremors of the cover member 20, since the noises are inputted to the respective microphones 31, 32, and 33, a recognition functions is deteriorated. However, according to the embodiment, since the plurality of buffering members 45 and 46 may be in contact with the cover member 20, the noises generated by the tremors of the cover member 20 may be prevented.

In this case, since the plurality of buffering members 45 and 46 are located adjacently to the respective microphones 31, 32, and 33, tremors of parts of the cover member 20 corresponding to the microphones 31, 32, and 33 are effectively prevented, thereby increasing a noise buffering effect.

In the embodiment, the plurality of buffering members 45 and 46 are provided on the upper body 12. However, differently, the plurality of buffering members 45 and 46 may be provided on the lower surface of the cover member 20. Also, the buffering members 45 and 46 may be provided on the cover member 20 and the upper body 12, respectively.

Also, in addition to the plurality of buffering members 45 and 46, as shown in FIG. 2, the main body 10 or the cover member 20 may include an additional buffering member.

In the above, the two buffering members 45 and 46 are provided on the periphery of the microphones 31, 32, and 33. However, one buffering member may be provided on the periphery of the microphones 31, 32, and 33. In this case, the one buffering member having a ring shape may be disposed to surround the periphery of the microphones 31, 32, and 33.

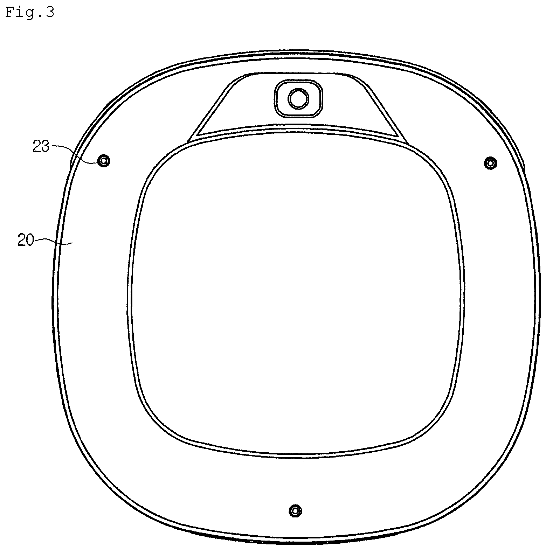

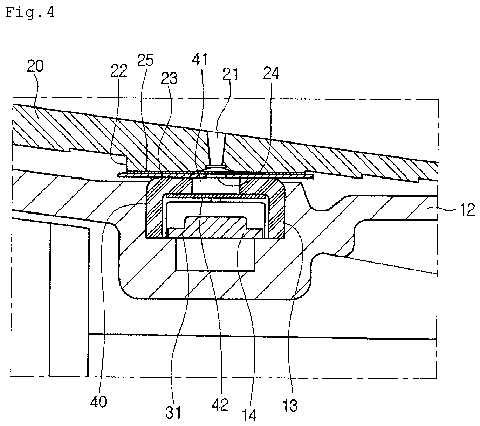

FIG. 3 is a bottom view illustrating the cover member 20, and FIG. 4 is a cross-sectional view illustrating a microphone installation configuration according to an embodiment of the present invention.

Referring to FIGS. 3 and 4, on the lower surface of the cover member 20, a plurality of noise prevention portions 23 may be provided. The plurality of noise prevention portions 23 is located to be opposite to the respective microphones 31, 32, and 33 while the cover member 20 is being combined with the main body 10. Also, in a position corresponding to the noise prevention portion 23 of the cover member 20, a guide hole 21 guiding an external voice may be formed. Also, on the respective noise prevention portions 23, holes 24 allowing a voice passing through the guide hole to pass therethrough may be formed.

The cover member 20 may be round. Accordingly, when installing the noise prevention portion 23, to allow the noise prevention portion 23 to maintain level, on the lower surface of the cover member 20, an installation portion 22 may protrude downwardly. In this case, since the cover member 20 is round, a protrusion length of the installation portion 22 may vary with a position of the cover member 20. Also, a lower surface of the installation portion 22 is a flat surface and is horizontal.

Also, the noise prevention portion 23 may be installed on the installation portion 22. On the cover member 20, a waterproof film 25 for preventing an inflow of external foreign substances or water into the robot cleaner 1 through the guide hole 21 may be provided. The waterproof film 25 allows a voice to pass and blocks water or foreign substances.

The waterproof film 25, for example, may be provided between the installation portion 22 and the noise prevention portion 23, may be attached to an upper surface of the cover member 20 to cover the guide hole 21, or may be attached to a lower surface of the noise prevention portion 23.

On the other hand, on the main body 10, in detail, on the upper body 12, receiving portions 13 for receiving the microphones 31, 32, and 33, respectively, may be formed. The receiving portion 13, for example, may be a groove dented downwardly from the upper body 12. The microphones 31, 32, and 33 may be mounted on bottom surfaces of the receiving portions 13, respectively.

The microphones 31, 32, and 33 mounted on the receiving portions 13 may be covered by sealing members 40, respectively. The sealing members 40 are formed with spaces for receiving the microphones 31, 32, and 33 and holes 41 for allowing a voice to pass through on upper surfaces thereof.

The sealing member 40 may be mounted on the bottom surface of the receiving portion 13 and may be formed of, for example, rubber. Merely, in the embodiment, a material of the sealing member 40 is not limited thereto.

Accordingly, since supporting the sealing members 40 and the microphones 31, 32, and 33, the bottom surfaces of the receiving portions 13 may be designated as supporting portions.

The microphones 31, 32, and 33 are closely attached to inner circumferences of the sealing members 40 while being received in the sealing members 40. Accordingly, due to the sealing members 40, horizontal movements of the microphones 31, 32, and 33 may be prevented, respectively.

On an inside of the sealing member 40, a filter 42 for removing a noise from an inputted voice may be provided. The filter 42, for example, may be nonwoven fabrics, but in the embodiment, is not limited thereto.

While the sealing member 40 is being received in the receiving portion 13, a part of the sealing member 40 may protrude upwardly from the upper body 12. The sealing member 40 protrudes upwardly from the upper body 12 in order to be closely attached to the noise prevention portion 23 while the Cover member 20 is being combined with the main body 10.

According to the embodiment, the sealing member 40 is closely attached to the noise prevention portion 23 while the cover member 20 is being combined with the main body 10, thereby preventing a gap formed between the sealing member 40 and the noise prevention portion 23. Accordingly, it may be prevented that noises occurring from a space between the cover member 20 and the main body 10 are inputted to the microphones 31, 32, and 33.

When the cover member 20 is combined with the main body 10, the guide hole 21 of the cover member 20, the hole 24 of the noise prevention portion 23, and the hole 41 of the sealing member 40 are arranged up and down.

Accordingly, the guide hole 21 and the holes 24 and 41 may function as a path for transferring a voice.

In the embodiment, the sealing members 40, the microphones 31, 32, and 33, and the filters 24 may be commonly designated as voice input units. Merely, the filters 24 may be omitted in the voice input units.

## Claims

1. A robot cleaner comprising:
a main body (10) having a control unit;
a voice input unit installed on the main body (10) and comprising a microphone (31, 32, 33), wherein the control unit is configured to recognize a voice command based on voice signals from the voice input unit;
a cover member (20) to cover the voice input unit; and
a buffering member (45, 46) provided on one of the main body (10) and the cover member (20) and adjacent to the voice input unit.

2. The robot cleaner of claim 1, wherein when the cover member (20) is coupled to the main body (10), the cover member (20) is in contact with the buffering member (45, 46), or
wherein in a state which the cover member (20) is spaced apart from the buffering member (45, 46), the cover member (20) is deformed by an external force to be in contact with the buffering member (45, 46).

3. The robot cleaner of claim 1 or 2, wherein the buffering member (45, 46) is provided in plurality,
the voice input unit is disposed in an area between the plurality of buffering members (45, 46).

4. The robot cleaner of any of claims 1 to 3, further comprising an additional buffering member (45, 46) spaced apart from the buffering member (45, 46).

5. The robot cleaner of any of claims 1 to 4, wherein the cover member (20) is provided with a guide hole (21) and a noise prevention portion (23) formed with a hole aligned with the guide hole (21), and
wherein when the cover member (20) is coupled to the main body (10), the noise prevention portion (23) is in contact with the voice input unit.

6. The robot cleaner of claim 5, wherein the cover member (20) is provided with an installation portion (22) to allow the noise prevention portion (23) to be installed while maintaining level, and
wherein a lower surface of the installation portion (22) is a flat surface and maintains level.

7. The robot cleaner of claim 5 or 6, wherein the cover member (20) is provided with a waterproof film (25) for preventing an inflow of external foreign substances or water through the guide hole (21).

8. The robot cleaner of claim 7, wherein the waterproof film (25) is provided on at least one of an upper surface of the cover member (20), a space between the installation portion (22) and the noise prevention portion (23), or a lower surface of the noise prevention portion (23).

9. The robot cleaner of any one of claims 1 to 8, wherein the main body (10) comprises a receiving portion (13) to receive the voice input unit,
wherein the voice input unit further comprises a sealing member (40) to cover the microphone, and
wherein the sealing member (40) and the microphone (31, 32, 33) are supported by a bottom surface of the receiving portion (13) .

10. The robot cleaner of claim 9, wherein while the sealing member (40) is being received in the receiving portion (13), the sealing member (40) protrudes upwardly from the main body (10).

11. The robot cleaner of claim 9 or 10, wherein the sealing member (40) is provided with a hole (41) for guiding a voice.

12. The robot cleaner of any one of claims 1 to 11, wherein a filter (14) to remove noises is provided in the sealing member (40) .

## Patentansprüche

1. Reinigungsroboter, der aufweist:
einen Hauptkörper (10), der eine Steuereinheit aufweist;
eine Spracheingabeeinheit, die am Hauptkörper (10) installiert ist und ein Mikrofon (31, 32, 33) aufweist, wobei die Steuereinheit konfiguriert ist, einen Sprachbefehl beruhend auf Sprachsignalen aus der Spracheingabeeinheit zu erkennen;
ein Abdeckelement (20), um die Spracheingabeeinheit abzudecken; und
ein Pufferelement (45, 46), das am Hauptkörper (10) oder am Abdeckelement (20) vorgesehen ist und zur Spracheingabeeinheit benachbart ist.

2. Reinigungsroboter nach Anspruch 1, wobei wenn das Abdeckelement (20) mit dem Hauptkörper (10) gekoppelt ist, das Abdeckelement (20) mit dem Pufferelement (45, 46) in Kontakt steht, oder
wobei in einen Zustand, in dem das Abdeckelement (20) vom Pufferelement (45, 46) beabstandet ist, das Abdeckelement (20) durch eine äußere Kraft so verformt wird, dass es mit dem Pufferelement (45, 46) in Kontakt steht.

3. Reinigungsroboter nach Anspruch 1 oder 2, wobei das Pufferelement (45, 46) mehrfach vorgesehen ist,
die Spracheingabeeinheit in einem Bereich zwischen den mehreren Pufferelementen (45, 46) vorgesehen ist.

4. Reinigungsroboter nach einem der Ansprüche 1 bis 3, der ferner ein zusätzliches Pufferelement (45, 46) aufweist, das vom Pufferelement (45, 46) beabstandet ist.

5. Reinigungsroboter nach einem der Ansprüche 1 bis 4, wobei das Abdeckelement (20) mit einem Führungsloch (21) und einem Schallschutzabschnitt (23) versehen ist, der mit einem Loch ausgebildet ist, das mit dem Führungsloch (21) ausgerichtet ist, und
wobei wenn das Abdeckelement (20) mit dem Hauptkörper (10) gekoppelt ist, sich der Schallschutzabschnitt (23) mit der Spracheingabeeinheit in Kontakt befindet.

6. Reinigungsroboter nach Anspruch 5, wobei das Abdeckelement (20) mit einem Einbauabschnitt (22) versehen ist, um es zu ermöglichen, dass der Schallschutzabschnitt (23) eingebaut wird, während er in der Lage bleibt, und
wobei eine untere Fläche des Einbauabschnitts (22) eine ebene Fläche ist und in der Lage bleibt.

7. Reinigungsroboter nach Anspruch 5 oder 6, wobei das Abdeckelement (20) mit einem wasserdichten Film (25) versehen ist, um den Eintritt von äußeren Fremdkörpern oder Wasser durch das Führungsloch (21) zu verhindern.

8. Reinigungsroboter nach Anspruch 7, wobei der wasserdichte Film (25) mindestens an einer Oberseite des Abdeckelements (20), einem Raum zwischen dem Einbauabschnitt (22) und dem Schallschutzabschnitt (23), oder an einer Unterseite des Schallschutzabschnitts (23) vorgesehen ist.

9. Reinigungsroboter nach einem der Ansprüche 1 bis 8, wobei der Hauptkörper (10) einen Aufnahmeabschnitt (13) aufweist, um die Spracheingabeeinheit aufzunehmen,
wobei die Spracheingabeeinheit ferner ein Dichtungselement (40) aufweist, um das Mikrofon abzudecken, und
wobei das Dichtungselement (40) und das Mikrofon (31, 32, 33) durch eine Bodenfläche des Aufnahmeabschnitts (13) gehalten werden.

10. Reinigungsroboter nach Anspruch 9, wobei während das Dichtungselement (40) im Aufnahmeabschnitt (13) aufgenommen ist, das Dichtungselement (40) nach oben aus dem Hauptkörper (10) vorsteht.

11. Reinigungsroboter nach Anspruch 9 oder 10, wobei das Dichtungselement (40) mit einem Loch (41) zum Leiten von Sprache versehen ist.

12. Reinigungsroboter nach einem der Ansprüche 1 bis 11, wobei ein Filter (14) im Dichtungselement (40) vorgesehen ist, um Geräusche zu entfernen.

## Revendications

1. Robot nettoyeur, comprenant :
un corps principal (10) comprenant une unité de commande ;
une unité d'entrée vocale installée sur le corps principal (10) et comprenant un microphone (31, 32, 33), l'unité de commande étant prévue pour reconnaître une instruction vocale sur la base de signaux vocaux de l'unité d'entrée vocale ;
un élément de couvercle (20) destiné à recouvrir l'unité d'entrée vocale ; et
un élément tampon (45, 46) prévu sur le corps principal (10) ou sur l'élément de couvercle (20) et adjacent à l'unité d'entrée vocale.

2. Robot nettoyeur selon la revendication 1, où, quand l'élément de couvercle (20) est raccordé au corps principal (10), l'élément de couvercle (20) est en contact avec l'élément tampon (45, 46), ou,
dans un état où l'élément de couvercle (20) est espacé de l'élément tampon (45, 46), l'élément de couvercle (20) est déformé par une force extérieure pour être en contact avec l'élément tampon (45, 46) .

3. Robot nettoyeur selon la revendication 1 ou la revendication 2, où l'élément tampon (45, 46) est prévu en pluralité,
l'unité d'entrée vocale est disposée dans une zone entre la pluralité d'élément tampons (45, 46).

4. Robot nettoyeur selon l'une des revendications 1 à 3, comprenant en outre un élément tampon additionnel (45, 46) espacé de l'élément tampon (45, 46).

5. Robot nettoyeur selon l'une des revendications 1 à 4, où l'élément de couvercle (20) est pourvu d'un trou de guidage (21) et d'une section de réduction de bruit (23) formée avec un trou aligné sur le trou de guidage (21), et
où, quand l'élément de couvercle (20) est raccordé au corps principal (10), la section de réduction de bruit (23) est en contact avec l'unité d'entrée vocale.

6. Robot nettoyeur selon la revendication 5, où l'élément de couvercle (20) est pourvu d'une section d'installation (22) permettant à la section de réduction de bruit (23) d'être installée avec maintien de niveau, et
où une surface inférieure de la section d'installation (22) est une surface plane de maintien de niveau.

7. Robot nettoyeur selon la revendication 5 ou la revendication 6, où l'élément de couvercle (20) est pourvu d'un film étanche (25) empêchant la pénétration de substances extérieures ou d'eau par le trou de guidage (21).

8. Robot nettoyeur selon la revendication 7, où le film étanche (25) est prévu sur une surface supérieure de l'élément de couvercle (20) et/ou un espace entre la section d'installation (22) et la section de réduction de bruit (23) et/ou une surface inférieure de la section de réduction de bruit (23).

9. Robot nettoyeur selon l'une des revendications 1 à 8, où le corps principal (10) comprend une section de logement (13) destinée à recevoir l'unité d'entrée vocale,
où l'unité d'entrée vocale comprend en outre un élément de joint (40) pour couvrir le microphone, et
où l'élément de joint (40) et le microphone (31, 32, 33) sont supportés par une surface de fond de la section de logement (13).

10. Robot nettoyeur selon la revendication 9, où, l'élément de joint (40) étant mis en place dans la section de logement (13), l'élément de joint (40) fait saillie vers le haut sur le corps principal (10).

11. Robot nettoyeur selon la revendication 9 ou la revendication 10, où l'élément de joint (40) est pourvu d'un trou (41) de guidage vocal.

12. Robot nettoyeur selon l'une des revendications 1 à 11, où un filtre (14) anti-bruit est prévu dans l'élément de joint (40).
